# EUROPEAN PATENT SPECIFICATION

(11) **EP 0 282 041 B1**
(45) Date of publication and mention of the grant of the patent: **15.06.1994**
(21) Application number: 88103736.0
(22) Date of filing: 09.03.1988
(51) Int. Cl.: B62D 6/04, B62D 9/00

(54) **A yaw motion control device for a vehicle**
Gierkontrolleinrichtung für ein Fahrzeug
Dispositif de contrôle de lacet pour véhicule

(30) Priority: 09.03.1987 JP 53501/87; 09.03.1987 JP 53502/87; 09.03.1987 JP 53503/87; 02.10.1987 JP 250167/87; 02.10.1987 JP 250168/87; 02.10.1987 JP 250169/87
(43) Date of publication of application: 14.09.1988
(60) Divisional application: 93114170.9
(73) Proprietor: HONDA GIKEN KOGYO KABUSHIKI KAISHA, Minato-ku, Tokyo (JP)
(72) Inventor: Shiraishi, Shuji, Chuo Wako-shi Saitama (JP); Kiryu, Hironobu, Chuo Wako-shi Saitama (JP)
(74) Representative: Prechtel, Jörg, Dipl.-Phys. Dr.

(56) References cited:
- EP-A- 0 150 856
- EP-A- 0 236 947
- US-A- 4 706 771
- PATENT ABSTRACTS OF JAPAN vol. 9, no. 282 (M-428)() 09 November 1985, & JP-A-60 124571 (KAYABA KOGYO KK) 03 July 1985,
- PATENT ABSTRACTS OF JAPAN vol. 12, no. 141 (M-691)() 28 April 1988, & JP-A-62 261575 (TOYOTA MOTOR CORP) 13 November 1987,

## Description

The present invention relates to a yaw motion control device for a vehicle.

Conventionally, an antilock brake is known as a control device for controlling a yaw motion of the vehicle. However, the antilock brake is primarily directed to the control of a braking performance, and concerning a motion performance, it simply functions to prevent a reduction in side resistant force of tires.

In JP-A-191875/85 a vehicular steering controlling method is described, wherein a lateral acceleration of the vehicle is calculated on the basis of detected values of steering angle and vehicle speed. This calculated lateral acceleration is compared with a detected lateral acceleration. The resulting deviation signal is input to a controller for controlling the steering anle of the rear wheels of a vehicle with four-wheel steering. Instead of the lateral acceleration a yaw rate can be calculated on the basis of the detected steering angle and vehicle speed.

In JP-A-113710/85 an automobile cornering sensor is described, which calculates the centripetal acceleration on the basis of the difference between the rotating speeds of left and right rotating wheels of the vehicle. The equation of motion of the vehicle is used for exact determination of vehicle driving parameters.

From JP-A-61-175 180 a yaw motion control device according to the preamble part of claim 1 is known. On the basis of the measured instantaneous values of the steering angle and the vehicle speed a complicated calculation for obtaining the reference yaw rate and a reference yaw acceleration is performed by solving six differential equations. It is proposed to employ an integration method or the Runge-Kutta method. These calculations need large computer capacity and are difficult to be performed in very short time as required. This known device is used for steering control of the front wheels, whereas in JP-A-62-151 170 a corresponding device is shown for 4-wheel steering control.

From JP-A-60-124571 it is known for a 4-wheel steering control system to employ a speed sensor, a steering angle sensor, a steering angle speed sensor and a steering angle acceleration sensor the output of which is compared with referential data stored in a data map in order to obtain a reference yaw rate. This rate is compared with a measured yaw rate to obtain a steering angle correction which ensures that the rear wheels follow the same trace as the front wheels.

The object of the present invention is to provide an improved yaw motion control device for a vehicle with respect to simple construction and better performance.

This object is solved by the features of claim 1. In this way, the time response-characteristic of the vehicle upon more or less sudden changes in the steering angle is taken into account when generating the reference yaw rate thus improving the performance of the yaw motion control device. There is no need for complex calculations, for example of the equation of motion; it is only necessary to store the last and before-last actual value of the steering angle and to take these stored values into account when calculating the new reference yaw rate.

It is only necessary to provide a steering angle sensor. For improving the accuracy of reference yaw rate determination however, it is further proposed that said reference yaw rate generating means is designed for generating said reference yaw rate in response to an output from a vehicle speed detector (in combination with the output of said steering angle sensor).

In a preferred embodiment of the invention said reference yaw rate generating means is designed to generate said reference yaw rate in response to a history of an output of said steering angle sensor. In this way, the rate of changing of the steering angle is taken into account in determining the reference yaw rate.

In general, the steering angle changes more rapidly than the actual yaw rate because of the mass of the vehicle. In order to take this time delay of the movement of the vehicle into account, it is preferred to take both histories of the output of said yaw rate detecting means and of the output of said steering angle sensor into account. In this case, an accurate value for the reference yaw rate is obtained by only considering the last and before-last value of the steering angle and the detected yaw rate. Since the detected yaw rate is taken into account, the actual yaw motion of the vehicle determines the reference yaw rate, so that for example road conditions are reflected in the calculated reference yaw rate.

In case that the detected yaw rates are improper for calculating the reference yaw rate, e.g. because of high noise, it is alternatively possible to design the reference yaw rate generating means for taking account of a history of an output of said reference yaw rate generating means by generating said reference yaw rate.

It turned out that the steering characteristic of the vehicle is nonlinear while the vehicle is running at a low running speed when the steering angle is large, while the yaw motion controller defines a reference yaw rate by a linear function. Accordingly, the deviation of a detected yaw rate from the reference yaw rate increases causing excessive control of the yaw rate. If the reference yaw rate is set for a large value to obviate such excessive yaw rate control during the low-speed running of the vehicle, insufficient yaw rate control results during the high-speed running of the vehicle because the yaw rate varies greatly even if the steering angle is small during the high-speed running of the vehicle. In order to provide a yaw motion controller for a vehicle capable of properly controlling the yaw motion of a vehicle according to the driving parameters of the vehicle, especially according to the running speed of the vehicle, a control characteristic correcting means is provided for changing a control characteristic of said yaw motion correcting means in response to at least one driving parameter of the vehicle.

It is therefore possible to detect that a yaw rate is not at an desired value in detecting an actual yaw rate and comparing with a desired yaw rate obtained e.g. in response to a measured steering angle thereby controlling the yaw motion. Moreover, the control of the yaw motion can be changed according to e.g. the vehicle speed. Accordingly, it is possible to precisely control yaw motion in accordance with the vehicle speed.

The control characteristic correcting means may be designed for changing said control characteristic of said yaw motion correcting means in response to an output from a steering angle sensor in addition or alternatively in response to an output from a vehicle speed detector.

When the tendency of over-steering occurs e.g. in a front wheel drive vehicle, a yaw motion control device only operating on the basis of a deviation between a detected yaw rate and a calculated reference yaw rate may be undesirably brought into an over-control condition. To provide a yaw motion control device for a vehicle which is designed to control the yaw motion according to a steering characteristic when a yaw rate of the vehicle has slipped from a desired value, a steering characteristic determining means is provided for determining a steering characteristic of said vehicle according to an output from said reference yaw generating means and an output from said yaw rate detecting means, wherein said control characteristic correcting means is designed for changing a control characteristic of said yaw motion correcting means in response to an output from said steering characteristic determining means.

The control of the yaw motion can therefore be changed according to a steering characteristic. For example, when the tendency of over-steering occurs even in a front wheel drive vehicle, it is possible to prevent that the vehicle will yaw in an undesirable direction.

In some vehicles, the driving mode can be changed over between a two-wheel drive mode and a four-wheel drive mode or the driving force distribution ratio between the front and rear wheels is variable. In such a vehicle, the yaw motion control characteristics must be varied properly according to the change of the driving wheels or to the variation of the driving force distribution ratio. To provide a yaw motion controller for a vehicle capable of properly controlling the yaw motion of the vehicle by varying the control characteristics thereof depending on the driving force distribution ratio (changing between a two-wheel drive mode or a four-wheel drive mode or a variable driving force distribution ratio between the front and rear wheels) a driving force distribution ratio detecting means is provided for detecting the driving force distribution ratio between front and rear wheels, wherein said control characteristic correcting means is designed for changing a control characteristic of said yaw motion correcting means in response to an output from said driving force distribution ratio detecting means.

According to this arrangement, it is possible to detect that the yaw rate is not at a desired value from a detected yaw rate and a desired yaw rate obtained according to a steering angle thereby controlling the yaw motion. Moreover, since the yaw motion control mode is changed according to the output of the driving force distribution ratio detecting means, the yaw motion of the vehicle can properly be controlled depending on whether the front wheels are the driving wheels or whether the rear wheels are the driving wheels or according to a variable driving force distribution ratio.

The yaw motion correcting means may comprise a driving wheel output torque control device, especially an engine output control device. However, said yaw motion correcting means may also comprise a device for controlling the steering angle of steered wheels, preferably as part of a four-wheel steering control means.

The invention further relates to a yaw rate detecting device for use within a yaw control device for a vehicle as described above. A yaw rate detecting device according to the above-mentioned JP-A-113710/85 comprises speed sensors for individually detecting the ground speed of the right side of the vehicle and that of the left side of the vehicle, speed difference calculating means for calculating the difference between the respective detection values of the speed sensors and calculating means to determine a yaw rate in response to an output of said speed difference calculating means.

For improving the performance, especially the detecting accuracy of such a device, it is proposed to provide a filter means connected to the speed difference calculating means to filter frequency components beyond a predetermined frequency from the output of the speed difference calculating means to determine a yaw rate, wherein said predetermined frequency is lower than a resonance frequency of the vehicle suspension in moving direction or vertical direction.

By this filtering the influence of vibration of a vehicle suspension to the wheel speeds is eliminated.

Preferably, the filter means is a recursive filter.

According to the invention, a steering characteristics discriminating device is provided for use within a yaw control device for a vehicle as described above. This steering characteristics discriminating device comprises a reference yaw rate generating means for generating a reference yaw rate, a yaw rate detecting means for detecting a yaw rate and a steering characteristics determining means for determining a steering characteristic of said vehicle according to an output from said reference yaw generating means and an output from said yaw rate detecting means. Such a steering characteristics discriminating device may be used as as sensor for over-steering or under-steering of a vehicle. Such a sensor may be used e.g. in connection with a four-wheel steering device with control of the steering angle to ensure stable driving conditions. Such a sensor may also be used within a four-wheel drive device with control of the variable distribution ratio to ensure stable driving conditions.

Further preferred embodiments of the invention are described in the subclaims.

Preferred embodiments of the invention will be described with reference to the drawings.
- Fig. 1: is a general block diagram of a first preferred embodiment of the present invention;
- Fig. 2: is a block diagram of the yaw rate detecting means shown in Fig. 1;
- Fig. 3: is a general block diagram of a second preferred embodiment of the present invention;
- Fig. 4: is a graph showing an exemplary output characteristic of the constant selection circuit shown in Fig. 3;
- Fig. 5: shows an exemplary output characteristic of the control characteristic correcting means as shown in Fig. 3; and
- Fig. 6: is a general block diagram of a third preferred embodiment of the present invention.

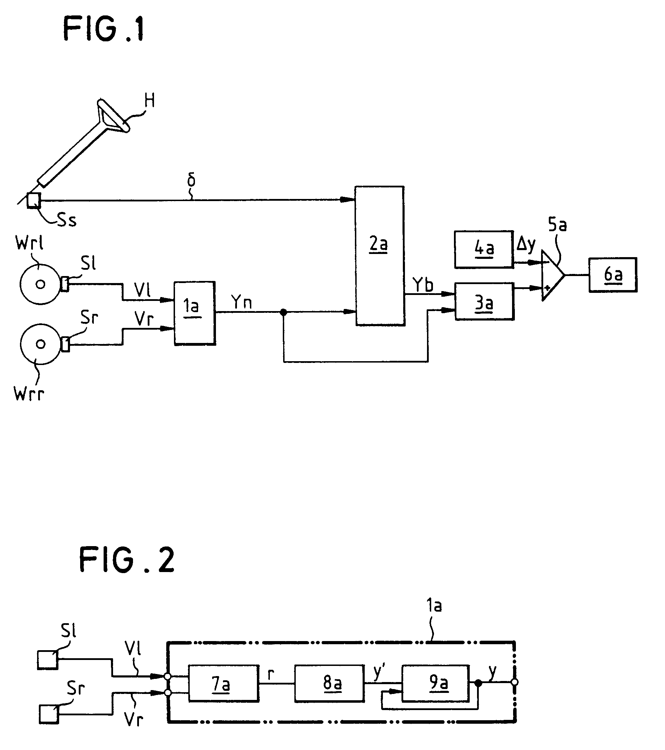

Referring now to Fig. 1, left and right rear wheels Wrl and Wrr as trailing wheels in a front wheel drive vehicle are provided with independent speed sensors S1 and Sr, respectively, and output signals from the speed sensors S1 and Sr representing approximate ground speeds of both right and left vehicle sides are input to a yaw rate detecting means 1a. An output from the yaw rate detecting means 1a is input to a reference yaw rate generating means 2a, and is also input to a subtracting means 3a. A steering handle H is provided with a steering angle sensor Ss, and an output from the steering angle sensor Ss is input to the reference yaw rate generating means 2a. An output from the reference yaw rate generating means 2a is input to the subtracting means 3a, and an output from the subtracting means 3a is input to a non-inversion input terminal of a comparator 5a. On the other hand, a reference value from a reference circuit 4a is input to an inversion input terminal of the comparator 5a. An output from the comparator 5a is input to a driving wheel output torque control device 6a, e.g., an engine output control device as the yaw motion correcting means.

Referring to Fig. 2, the yaw rate detecting means 1a includes a subtraction circuit 7a, a multiplication circuit 8a and a filter 9a. The subtraction circuit 7a detects a difference r between wheel speeds Vr and Vl ( $\text{r=Vr-Vl}$ ) detected by the speed sensors Sr and S1, and the multiplication circuit 8a multiplies the difference r by a certain proportional constant d to obtain an approximate value yʹ of a yaw rate. The proportional constant d describes a tread between the rear wheels Wrl and Wrr, which is d=1, for example. The filter 9a serves to eliminate the influence of vibration of a vehicle suspension to the wheel speeds Vl and Vr, which is a recursive filter. Since the fluctuation of wheel speeds Vl and Vr due to resonance of wheel vibration and suspension vibration during running on a rough road is about 10 Hz, and a frequency range of the yaw rate employable for the control of a vehicle motion is 0-2 Hz, the filter 9a operates to filter the approximate value yʹ of the yaw rate with a frequency range of 2 Hz or more used as a reduction range.

The filter 9a generates an output yn as calculated in accordance with the following expression (1).

${\text{yn = α₁*y}}_{\text{n-1}} {\text{+ α₂*y}}_{\text{n-2}} {\text{+ α₃*y}}_{\text{n-3}} {\text{+ β₁*yʹ}}_{\text{n}} {\text{+ β₂*yʹ}}_{\text{n-1}} {\text{+ β₃*yʹ}}_{\text{n-2}} \text{(1)}$

where, α₁ ... α₃ and β₁ ... β₃ are constants determined by an experimental result, and the suffixes n, n-1 and n-2 stand for a present value and a previous value, etc. in each cycle where the calculation in filtering is repeated.

The reference yaw rate generating means 2a serves to calculate a reference yaw rate y_{b} to be presently desired according to the history of a steering angle δ(δₙ₋₁, δₙ₋₂) obtained by the steering angle sensor Ss and the history of the yaw rate y (yₙ₋₁, yₙ₋₂) obtained by the yaw rate detecting means 1a. The reference yaw rate y_{b} is calculated in accordance with the following expression (2).

${\text{y}}_{\text{b}} {\text{= -a₁*y}}_{\text{n-1}} {\text{- a₂*y}}_{\text{n-2}} {\text{+ b₁*δ}}_{\text{n-1}} {\text{+ b₂*δ}}_{\text{n-2}} \text{(2)}$

where, a₁, a₂, b₁ and b₂ stand for parameters changing with a vehicle speed, and they are preliminarily given in a map as follows:
a₁ = -1.4 - +1.8
a₂ = +0.5 - +0.8
b₁ = +0.01 - -0.0008
b₂ = +0.009 - +0.001
The subtracting means 3a calculates an absolute value |y_{b} - yₙ| of a difference between the reference yaw rate y_{b} and the yaw rate y. That is, a slippage between the yaw rate y_{b} to be presently desired and the present yaw rate yₙ is calculated, and the slippage is compared with a reference value Δy set by the reference circuit 4a by the comparator 5a. Then, an engine output is controlled by the engine output control device 6a according to the result of the comparison. Further, the reference value y is determined in response to vehicle speed beforehand. In operation, the yaw rate y of the vehicle is obtained by multiplying the difference (Vr - Vl) in wheel speeds between the left and right trailing wheels Wrl and Wrr by the proportional constant d, and then filtering the product to eliminate the influence of the vehicle suspension. Thus, the yaw rate y can be easily obtained with no problems in practical use.

Then, the difference between the yaw rate y as presumed above and the reference yaw rate y_{b} calculated as a value to be presently desired according to the history of the steering angle δ and the yaw rate y is compared with the reference value y, thereby preliminarily perceiving that the vehicle will yaw in an undesirable direction. Thus, the yaw motion may be controlled.

In a front wheel drive vehicle, for example, when an excessive driving force is applied as the vehicle is steered, the tendency of under-steering occurs. As a result, when it is detected that the vehicle has yawed in an undesirable direction, the engine output control device 6a operates in response to the output from the comparator 5a to reduce an engine output. In response to the reduction in the engine output, a driving force of driving wheels is reduced, and instead thereof, a limited side force of the driving wheels is increased, thereby preventing the understeering as mentioned above. On the other hand, in the case of a rear wheel drive vehicle, the tendency of over-steering occurs when an excessive driving force is applied. However, the over-steering may be prevented by reducing the driving force in the same manner as the case of the front wheel drive vehicle. Thus, when the actual yaw rate y has approached the reference yaw rate y_{b} by reducing the engine output, that is, when the absolute value |y_{b} - yₙ| becomes smaller than the reference value Δy, the reduction in the engine output is released, and a normal engine output control is restored. As described above, the actual yaw rate y is controlled to be near the reference yaw rate y_{b} by controlling the engine output, and is made accord with a yaw rate at a driver's will in the vehicle.

In the case of the rear wheel drive vehicle, the difference in wheel speeds between trailing wheels to be used in the calculation of the yaw rate y may be a difference in wheel speeds between right and left front wheels also serving as steering wheels.

The reduction in engine output by the engine control device 6a is achieved, for example, by operating a suction throttle valve control device to be driven by a pulse motor or the like into a valve closing direction, decreasing or cutting a fuel to be supplied to the engine by a fuel control device, cutting or retarding an ignition timing by an engine ignition device, or reducing a supercharged pressure by a supercharged pressure control device for controlling a suction air to be supplied to the engine.

As described above, the device of the present invention in the first aspect comprises a yaw rate detection means for detecting a yaw rate of said vehicle, a steering angle sensor for detecting a steering angle of a steering handle, a refererence yaw rate generating means for generating reference yaw rate according to an output from said steering angle sensor, and a yaw motion correcting means for controlling a yaw motion of said vehicle according to an ouput from said reference yaw rate generating means and an output from said yaw rate detecting means. Therefore, it is possible to perceive that the vehicle will yaw in an undesirable direction and control the yaw motion.
the device of the present invention in the second aspect is featured in that the reference yaw rate generating means generates the reference yaw rate according to the output from the yaw rate detecting means and the steering angle sensor, in addition to the constitution of the first aspect of the present invention. Therefore, it is possible to control the yaw motion more precisely in addition to the first aspect of the present invention.

The device of the present invention in a further aspect comprises speed detectors respectively for individually detecting the ground speed of the right side of a vehicle and that of the left side of the vehicle, speed difference calculating means for calculating the difference between the respective detection values of the speed detectors, and speed difference calculating means for calculating the difference between the respective detection values of the speed sensors to determine a yaw rate on the basis of the difference between the right and left sides of the vehicle in ground speed. Therefore, it is possible to detect a yaw rate in simple construction.

The device of the present invention in a further aspect is featured in that speed detectors respectively for individually detecting the ground speed of the right side of a vehicle and that of the left side of the vehicle, speed difference calculating means for calculating the difference between the respective detection values of the speed detectors, and a filter connected to the speed difference calculating means to filter frequency components beyond a predetermined frequency from the output of the speed difference calculating means to determine a yaw rate. Accordingly, it is possible to provide an improved yaw rate detecting device capable of detecting the yaw rate of a vehicle at a high accuracy regardless of vibrations of the suspension.

Although the above-described embodiment employs the system of determining reference yaw rate based upon history of yaw rate and history of steering angle, the reference yaw rate may be determined by only history of yaw rate.

As described above, the device of the present invention comprises a yaw rate detecting means for detecting a yaw rate of said vehicle, a reference yaw rate generating means for generating reference yaw rate based upon history of said yaw rate and a yaw motion correcting means for controlling a yaw motion of said vehicle according to an output from said reference yaw rate generating means and an output from said yaw rate detecting means. Therefore, it is possible to perceive that the vehicle will yaw in an undesirable direction and control the yaw motion.

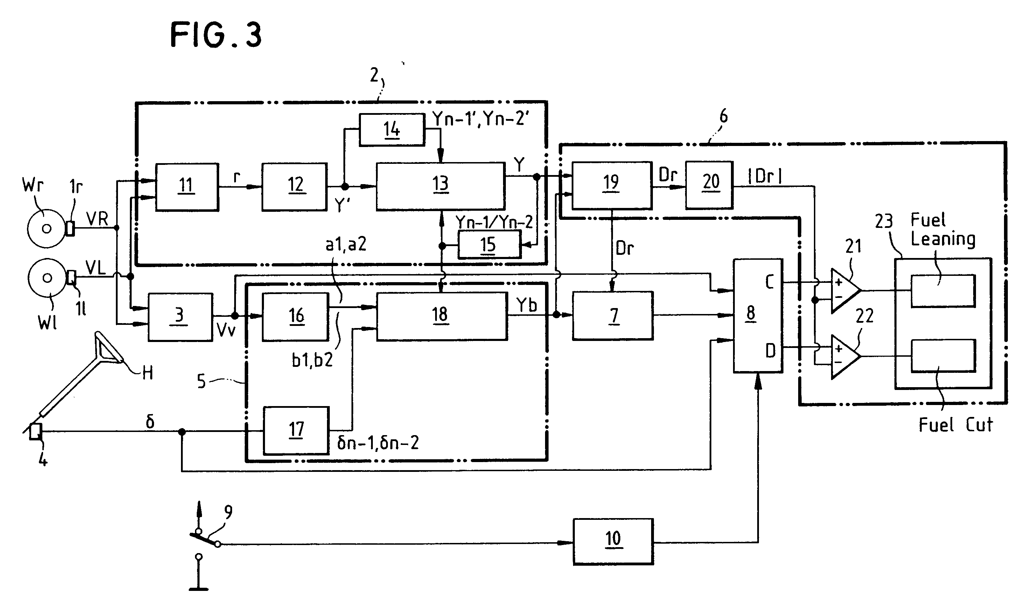

Referring now to fig. 3 which shows a first preferred embodiment of the present invention, left and right trailing wheels Wl and Wr of a vehicle are provided with independent speed sensors 1l and 1r, resepctively, and wheel speeds Vl and Vr detected by the speed sensors 1l and 1r are input to a yaw rate detecting means 2 and a vehicle speed detector 3. A steering handle H is provided with a steering angle sensor 4. A steering angle δ detected by the steering angle sensor 4, a vehicle speed Vv obtained by the vehicle speed detector 3, and a history of a yaw rate y obtained by the yaw rate detecting means 2 are input to a reference yaw rate generating means 5. The yaw rate y obtained by the yaw rate detecting means 2 and a reference yaw rate y_{b} generated from the reference yaw rate generating means 5 are input to a yaw motion correcting means 6. A deviation ${\text{Dr(= y - y}}_{\text{b}} \text{)}$ between the yaw rate y and the reference yaw rate y_{b} is obtained in the yaw motion correcting means 6. The deviation Dr and the reference yaw rate y_{b} are input to a steering characteristic determining means 7. The result of determination by the steering characteristic determining means, the vehicle speed Vv from the vehicle speed detector 3 and the steering angle δ from the steering angle sensor 4 are input to a control characteristic correcting means 8. Further, the vehicle is provided with a switch 9 for selecting an output voltage level to a high level or a low level according to the condition where the driving wheels are the front wheels or the rear wheels. An output from the switch 9 is input to driving wheel determining circuit 10, and the result of determination by the driving wheel determining circuit 10 is input to the control characteristic correcting means 8. The control characteristic correcting means 8 feeds a signal varying with each input signal to the yaw motion correcting means 6.

The yaw rate detecting means 2 includes a subtraction circuit 11, a multiplication circuit 12, a filter 13, a history accumulation circuit 14 for accumulating an output history of the multiplication circuit 12, and a history accumulation circuit 15 for accumulating an output history of the filter 13. The subtraction circuit 11 provides a difference r between the wheel speeds Vl and Vr ( $\text{r = Vr - Vl}$ ) detected by the speed sensors 1l and 1r, and the multiplication circuit 12 multiplies the difference r by a certain proportional constant d to obtain an approximate value $\text{yʹ ( = r * d)}$ of a yaw rate. The proportional constant d is a tread width between the trailing wheels Wl and Wr, which is d = 1, for example. The filter 13 serves to eliminate the influence of vibration of a vehicle suspension to the wheel speeds Vl and Vr, which is a recursive filter. Since the fluctuation of the wheel speeds Vl and Vr due to resonance of wheel vibration and suspension vibration during running on a rough road is about 10 Hz, and a frequency range of the yaw rate employable for the control of a vehicle motion is 0 - 2 Hz, the filter 13 operates to filter the approximate cvalue yʹ of the yaw rate with a frequency range of 2 Hz or more used as a reduction range. The filter 13 generates an output yₙ as calculated in accordance with the following expression (1).

${\text{yn = α₁*y}}_{\text{n-1}} {\text{+ α₂*y}}_{\text{n-2}} {\text{+ α₃*y}}_{\text{n-3}} {\text{+ β₁*yʹ}}_{\text{n}} {\text{+ β₂*yʹ}}_{\text{n-1}} {\text{+ β₃*yʹ}}_{\text{n-2}} \text{(1)}$

where, α₁ ... α₃ and β₁ ... β₃ are constants determined by an experimental result, and the suffixes n, n-1 and n-3 stand for a present value and a previous value, etc. in each cycle where the calculation in filtering is repeated. A last value, a before-last value and so on of the approximate value yʹ of the yaw rate are input from the history accumulation circuit 14 to the filter 13, while a last value, a before-last value and so on of the yaw rate y are input from the history accumulation circuit 15 to the filter 13.

The vehicle speed detector 3 serves to output the vehicle speed Vv according to the wheel speeds Vl and Vr detected by the speed sensors 1l and 1r. For example, the larger value of both the wheel speeds Vl and Vr is output as the vehicle speed Vv.

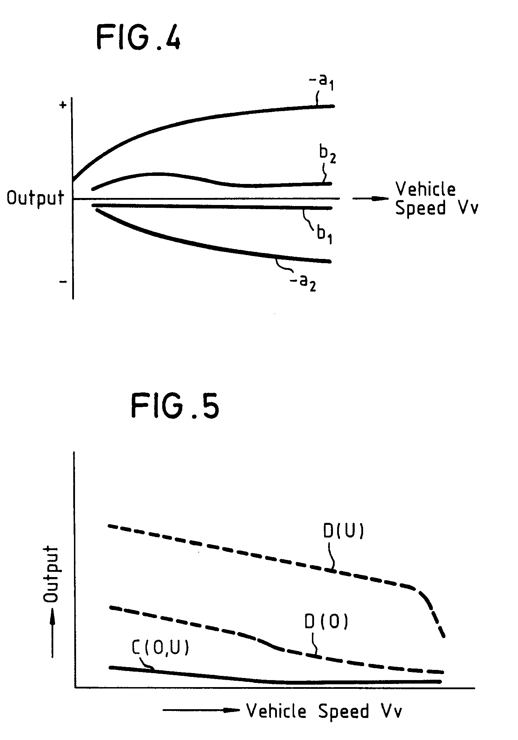

The reference yaw rate generating means 5 includes a constant selection circuit 16, a history accumulation circuit 17 and an arithmetic circuit 18. The constant selction circuit 16 serves to select constants a₁, a₂, b₁ and b₂ to be used in the calculation in the arithmetic circuit 18 according to the vehicle speed Vv obtained by the vehicle speed detector 3. The constants a₁, a₂, b₁ and b₂ are defined as shown in Fig. 4, for example, and they are input to the arithmetic circuit 18 according to the vehicle speed. The history accumulation circuit 17 is adapted to input the history of the steering angle δ detected by the steering angle sensor 4 to the arithmetic circuit 18. The arithmetic circuit 18 serves to calculate a reference yaw rate y_{b} to be presently desired according to the history of the yaw rate y from the history accumulation circuit 15 in the yaw rate detecting means 2 and the history of the steering anlge δ from the history accumulation circuit 17. The reference yaw rate y_{b} is calculated in accordance with the following expression (2).

${\text{y}}_{\text{b}} {\text{= -a₁*y}}_{\text{n-1}} {\text{- a₂*y}}_{\text{n-2}} {\text{+ b₁*δ}}_{\text{n-1}} {\text{+ b₂*δ}}_{\text{n-2}} \text{(2)}$

The yaw rate correcting means 6 includes a deviation calculation circuit 19 for providing ${\text{Dr(= y - y}}_{\text{b}} \text{)}$ between the yaw rate y obtained by the yaw rate detecting means 2 and the reference yaw rate y_{b} obtained by the reference yaw rate generating means 5, an absolute value generating circuit 20 for generating an absolute value of the deviation Dr, first and second comparators 21 and 22 for receiving an output from the absolute value generating circuit 20 at the respective inversion terminals, and a driving wheel output torque control circuit 23 connected to the respective output terminals of the first and second comparators 21 and 22. The driving wheel output torque control circuit 23 serves to control fuel to be supplied to an engine, for example. When the output from the first comparator 21 is in a low level, a quantity of fuel to be supplied is decreased to make a fuel mixture lean, while then the output from the second comparator 22 is in a low level, the supply of fuel is cut.

The steering characteristic determining means 7 receives the reference yaw rate y_{b} from the reference yaw rate generating means 5 and the deviation Dr from the deviation calculation circuit 19, and determines a steering characteristic according to the inputs Dr and y_{b}. That is, the criterion shown below in Table 1 is preliminarily defined in the steering characteristic determining means 7.

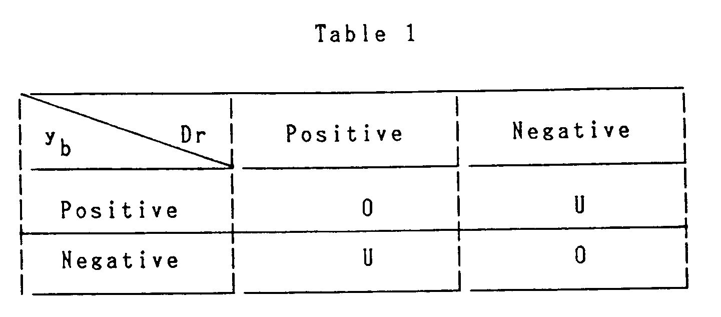

In Table 1, symbol O stands for over-steering, and symbol U stands for under-steering. The result of determination in accordance with Table 1 is output from the steering characteristic determining means 7.

The control characteristic correcting means 8 receives the vehicle speed Vv from the vehicle speed detector 3, the steering angle δ from the steering angle sensor 4, the signal corresponding to the result of determination from the driving wheel determining circuit 10, and the signal corresponding to the result to determination from the steering characteristic determining circuit 7. According to these input signals, the control characteristic correcting means 8 generates signals from an output terminal C connected to a non-inversion terminal of the first comparator 21 and an output terminal D connected to a non-inversion terminal of the second comparator 22. In the case that the vehicle is a front wheel drive vehicle, and the steering angle δ is relatively small, the output value from the output terminal C of the control characteristic correcting means 8 is set as shown by a solid line in Fig. 5, for example, and the output value from the output terminal D is set as shown by a broken line in Fig. 5, for example, according to the vehicle speed Vv and the result of determination by the steering characteristic determining means 7. In the case that the vehicle is a rear wheel drive vehicle, the output values different from those in Fig. 5 are set, and when the steering angle is relatively large, the output values from the output terminals C and D are set to be smaller than those shown in Fig. 5.

In operation, the yaw rate y of the vehicle is obtained by multyplying the difference (Vr - Vl) in wheel speeds between the left and right trailing wheels Wl and Wr by the proportional constant d, and then filtering the product by means of the filter 13 to thereby eliminate the influence of the vehicle suspension. Thus, the yaw rate y can be easily obtained with no problems in practial use.

When the absolute value of the deviation Dr between the yaw rate y as presumed above and the reference yaw rate y_{b} calculated as a value to be presently desired according to the history of the steering angle δ and the history of the yaw rate y exceeds the output values from the output terminals C and D of the control characteristic correcting means 8, the driving wheel output torque control means 23 operates to preliminariliy perceive that the vehicle will yaw in an undesirable direction, and control the yaw motion.

In a front wheel drive vehicle, for example, when an excessive driving force is applied as the vehicle is steered, the tendency of under-steering occurs. As a result, when it is detected that the vehicle has yawed in an undesirable direction, the driving wheel torque control circuit 23 operates in response to the outputs from the first and second comparators 21 and 22 to reduce an engine output. In response to the reduction in the engine output, a driving force of driving wheels is reduced, and instead thereof, a limited side force of the driving wheels is increased, thereby preventing the under-steering as mentioned above. On the other hand, in the case of a rear wheel drive vehicle, the tendency of over-steering occurs when an excessive driving force is applied. However, the over-steering may be prevented by reducing the driving force in the same manner as in the case of the front wheel drive vehicle. Thus, when the actual yaw rate y has approached the reference yaw rate y_{b} by reducing the engine output, the reduction in the engine output is released, and a normal engine output control is restored.

Furthermore, the output values from the output terminals C and D of the control characteristic correcting means 8 are set to be different according to the result of determination by the steering characteristic determining means 7. For example, when the tendency of over-steering occurs in a front wheel drive vehicle, a vehicle speed can be decreased to make a vehicle body stable before the vehicle body comes into the over-steering condition since the output value from the output terminal D is set to be smaller than the output value from the output terminal C. Further, in both the over-steering and the under-steering conditions, the output from the first comparator 21 becomes a low level before the output from the second comparator 22 becomes a low level, and accordingly the driving wheel output torque control circuit 23 operates to make lean the fuel mixture to be supplied to the engine, thus gradually decreasing the driving force. In this manner, it is possible to avoid the occurrence of over-controlling by gradually reducing the driving force.

When the steering angle δ is large at low vehicle speeds, the steering characteristic of the vehicle becomes non-linear, but the reference yaw rate y_{b} generated from the reference yaw rate generating means 5 is linear. Therefore, the deviation Dr between the reference yaw rate y_{b} and the yaw rate y becomes large. However, since the output values from the control characteristic correcting means 8 to the first and second comparators 21 and 22 are so set as to become small as the vehicle speed Vv increases. Accordingly, it is possible to prevent over-control at low vehicle speed running, and also prevent under-control at high vehicle running.

Further, since the output values from the control characteristic correcting means 8 are so set as to decrease as the steering angle δ increases, the output from the first comparator 21 or the second comparator 22 tends to become a low level. Accordingly, it is possible to prevent under-control due to an increased inertia force of the yaw motion when the steering handle H is steered at a large angle.

Further, since the output values from the control characteristic correcting means 8 varies according to whether the driving wheels are the front wheels or the rear wheels, it is possible to provide proper control of the yaw motion in response to a steering characteristic which varies according to whether the vehicle is a front wheel drive vehicle or a rear wheel drive vehicle.

Moreover, the driving wheel output torque control circuit 23 operates to select the control mode for making lean the fuel mixture to be supplied to the engine or the control mode for cutting the fuel supply to the engine according to the output from the control characteristc correcting means 8. Accordingly, more precise control can be provided as compared with only the control mode for cutting the fuel supply, thereby eliminating uncomfortability due to a large torque difference and preventing the over-control.

According to the first and second embodiments, the reference yaw rate y_{b} is calculated according to the history of the steering angle and the history of the yaw rate. The history of the yaw rate is influenced as a correction by the reference yaw rate factor, which is mainly calculated in accordance with the history of the steering angle.

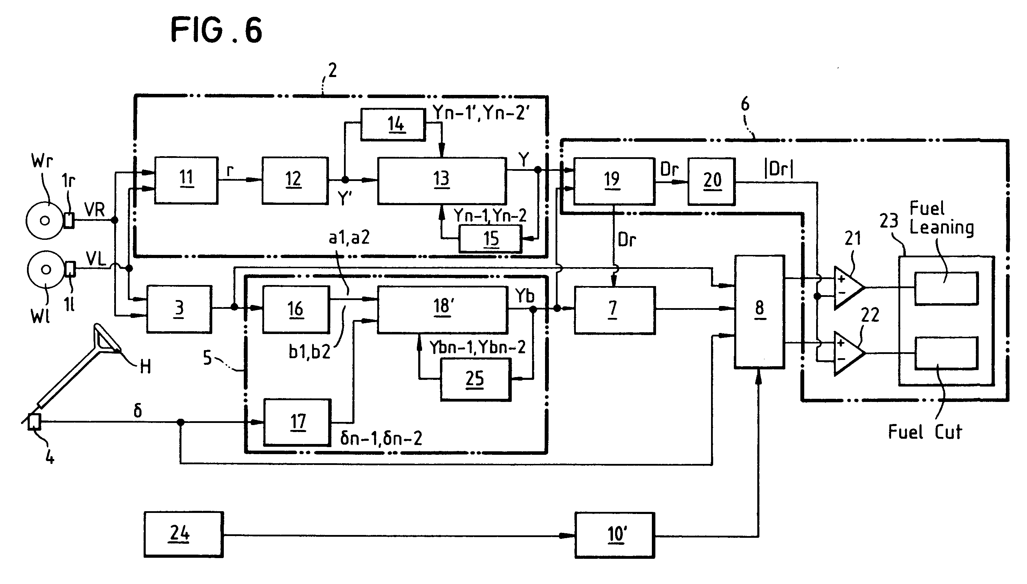

Fig. 6 shows another embodiment of the present invention, wherein the corresponding parts as in the preferred embodiment shown in Fig.3 are designated by the same reference numerals. An arithmetic circuit 18ʹ in a reference yaw rate generating means 5ʹ calculates a reference yaw rate y_{b} in accordance with the following expression (3).

${\text{y}}_{\text{b}} {\text{= -a₁*y}}_{\text{bn-1}} {\text{-a₂*y}}_{\text{bn-2}} {\text{+b₁*δ}}_{\text{n-1}} {\text{+b₂*δ}}_{\text{n-2}} \text{(3)}$

That is, the history of the reference yaw rate y_{b} obtained by the arithmetic circuit 18ʹ is accumulated in a history accumulation circuit 25. The arithmetic circuit 18ʹ receives the history y_{bn-1} and y_{bn-2} of the reference yaw rate y_{b} from the history accumulation circuit 25 and the history δₙ₋₁ and δₙ₋₂ of the steering angle δ from the history accumulation circuit 17 to calculate the reference yaw rate y_{b}.

A signal from a driving force distribution circuit 24 is input to a driving wheel determination circuit 10ʹ. The driving force distribution circuit 24 serves to control the distribution of a driving force to be applied to the front wheels and the rear wheels of the vehicle. The distribution rate of the driving force is detected by the driving wheel determination circuit 10ʹ, and is input to the control characteristic correcting means 8.

According to this embodiment, since the reference yaw rate y_{b} is calculated according to the history of the reference yaw rate y_{b}, the long history of the steering angle can be expressed in the simple equation because the history of the reference yaw rate includes the history of the steering angle. It has been found that the reference yaw rate can be assumed by long period of history of the steering angle, but long history requires large number of constants (steering response parameter; b₁, b₂ ....). The long time requires to set the many constants. Therefore, the simple equation has 4 constants to ease to set their value.

According to a further embodiment, the vehicle speed detector 3 may output as the vehicle speed Vv an average of the wheel speeds Vl and Vr of the trailing wheels Wl and Wr. Although, the above-mentioned embodiments employ the system of comparing the deviation Dr between the reference yaw rate y_{b} and the actual yaw rate y with a reference value, an engine output (e.g. throttle opening) may be controlled in proportion to the difference between the deviation Dr and the reference value. Further, although the reference yaw rate y_{b} is calculated from the history (n-1, n-2) at the last time and the before-last time in the previous embodiments, the reference yaw rate y_{b} may be calculated from the history (n-1,n-2,n-3,...) at more previous times.
As described above, the device of the present invention comprises a yaw rate detecting means for detecting a yaw rate of said vehicle; a steering angle sensor for detecting a steering angle of a steering handle; a reference yaw rate generating means for generating a reference yaw rate according to an output from said steering angle sensor; a steering characteristic determining means for determining a steering characteristic of said vehicle according to an output from said reference yaw rate generating means and an output from said yaw rate detecting means; a yaw motion correcting means for controlling a yaw motion of said vehicle according to an output from said reference yaw rate generating and and output from said yaw rate detecting means; and a control characteristc correcting means for changing a control characteristic of said yaw motion correcting means according to an output from said steering characteristic determining means. Therefore, it is possible to perceive that the vehicle will yaw in an undesirable direction and control the yaw motion. Furthermore, it is possible to provide proper control according to a steering characteristic since the control characteristic is varied in response to the steering characteristic.

The device of the present invention also comprises a yaw rate detecting means for detecting a yaw rate of said vehicle; a steering angle sensor for detecting a steering angle of a steering handle; a reference yaw rate generating means for generating a reference yaw rate according to an output from said steering angle sensor; a vehicle speed detector for detecting the vehicle speed; a yaw motion correcting means for controlling a yaw motion of said vehicle according to an output from said reference yaw rate generating and an output from said yaw rate detecting means; and a control characteristic correcting means for changing a control characteristic of said yaw motion correcting means according to an output from said vehicle speed detector. Therefore, it is possible to perceive that the vehicle will yaw in an undesrible direction and control the yaw motion. Furthermore, it is possible to provide a proper control according to a vehicle speed and a steering angle since the control characteristic is varied in response to the vehicle speed and the steering angle.

The device of the present invention also comprises a yaw rate detecting means for detecting a yaw rate of said vehicle; a steering angle sensor for detecting a steering angle of a steering handle; a reference yaw rate generating means for generating a reference yaw rate according to an output from said steering angle sensor; driving force distribution rate detecting means for detecting the driving force distribution ratio between the front and rear wheels; a yaw motion correcting means for controlling a yaw motion of said vehicle according to an output from said reference yaw rate generating and an output from said yaw rate detecting means; and a control characteristic correcting means for changing a control characteristic of said yaw motion correcting means according to an output from said driving force distribution ratio detecting means. Therefore, it is possible to perceive that the vehicle will yaw in an undesirable direction and control the yaw motion. Furthermore, it is possible to provide proper control according to a driving force distribution ratio since the control characteristic is varied in response to the driving force distribution ratio.

## Claims

1. A yaw motion control device for a vehicle comprising
- a yaw rate detecting means (1a;2) for detecting a yaw rate of said vehicle;
- a steering angle sensor (Ss;4) for detecting a steering angle (δ) of a steering wheel;
- a reference yaw rate generating means (2a; 5; 5') for generating a reference yaw rate (yb) in response to an output from said steering angle sensor (Ss;4);
- a yaw motion correction means (6) for controlling a yaw motion of said vehicle in response to an output from said reference yaw rate generating means (2a;5;5') and an output from said yaw rate detecting means (1a;2),
**characterized in**
that said reference yaw rate generating means (2a;5;5') is designed for generating a reference yaw rate (Y_{b}) in response to to two preceding values (δₙ₋₁,δₙ₋₂) of the output of said steering angle sensor (Ss;4).

2. A yaw motion control device according to claim 1, wherein said reference yaw rate generating means (2a;5) is designed for generating said reference yaw rate (yb) in response to said output from said yaw rate detecting means (1a;2).

3. A yaw motion control device according to at least one of claims 1 to 2, further comprising
- a vehicle speed detector (3) for detecting the vehicle speed.

4. A yaw motion control device according to claim 3, wherein said reference yaw rate generating means (5;5') is designed for generating said reference yaw rate (yb) in response to an output from said vehicle speed detector (3).

5. A yaw motion control device according to at least one of claims 1 to 4, further comprising
- a control characteristic correcting means (8) for changing a control characteristic of said yaw motion correcting means (6) in response to at least one driving parameter (δ;v; output of 7; output of 10') of the vehicle.

6. A yaw motion control device according to claim 5, wherein said control characteristic correcting means (8) is designed for changing said control characteristic of said yaw motion correcting means (6) in response to said output from said vehicle speed detector (3).

7. A yaw motion control device according to at least one of claims 5 to 6, further comprising
- a steering characteristic determining means (7) for determining a steering characteristic of said vehicle according to an output from said reference yaw generating means (5;5') and an output from said yaw rate detecting means (2),
wherein said control characteristic correcting means (8) is designed for changing a control characteristic of said yaw motion correcting means (6) in response to an output from said steering characteristic determining means (7).

8. A yaw motion control device according to at least one of claims 5 to 7, further comprising
- a driving force distribution ratio detecting means (10') for detecting the driving force distribution ratio between front and rear wheels,
wherein said control characteristic correcting means (8) is designed for changing a control characteristic of said yaw motion correcting means (6) in response to an output from said driving force distribution ratio detecting means (10').

9. A yaw motion control device according to at least one of claims 1 to 8, wherein said reference yaw rate generating means (5) is designed for generating said reference yaw rate (yb) in response to a history (yₙ₋₁,yₙ₋₂) of an output of said yaw rate detecting means (2).

10. A yaw motion control device according to claim 9, wherein said reference yaw rate generating means (5) has an output signal (y_{b}) according to
${\text{y}}_{\text{b}} {\text{= -a₁*y}}_{\text{n-1}} {\text{- a₂*y}}_{\text{n-2}} {\text{+ b₁*δ}}_{\text{n-1}} {\text{+ b₂*δ}}_{\text{n-2}}$
where a₁, a₂, b₁, b₂ are parameters changing with vehicle speed; n-1 and n-2 stand for previous value and before-previous value in each cycle, where the calculation of y_{b} is repeated; y is said output of said yaw rate detecting means (2) and δ is said output of said steering angle sensor (4).

11. A yaw motion control device according to at least one of claims 1 to 8, wherein said reference yaw rate generating means (5') is designed for generating said reference yaw rate (y_{b}) in response to a history (ybₙ₋₁,ybₙ₋₂) of an output of said reference yaw rate generating means (5).

12. A yaw motion control device according to claim 11, wherein said reference yaw rate generating means (5') has an output signal y_{b} according to
${\text{y}}_{\text{b}} {\text{= -a₁*y}}_{\text{bn-1}} {\text{- a₂*y}}_{\text{bn-2}} {\text{+ b₁*δ}}_{\text{n-1}} {\text{+ b₂*δ}}_{\text{n-2}} \text{,}$
where a₁, a₂, b₁, b₂ are parameters changing with vehicle speed; n-1 and n-2 stand for previous value and before-previous value in each cycle, where the calculation of y_{b} is repeated; δ is said output of said steering angle sensor (4).

13. A yaw motion control device according to at least one of claims 1 to 12, wherein said yaw motion correcting means (6) comprises a driving wheel output torque control device.

14. A yaw motion control device according to claim 13, wherein said driving wheel output torque control device comprises an engine output control device (23).

15. A yaw motion control device according to at least one of claims 1 to 14, wherein said yaw rate detecting means (1a;2) is designed for generating a reference yaw rate (y_{b}) according to a difference in rotating speeds (Vr,Vl) between right and left free rotating wheels (Wr,Wl).

16. A yaw motion control device according to at least one of claims 1 to 15, wherein said yaw motion correcting means (6) comprises a device for control of steering angle of steered wheels.

17. A yaw motion control device according to claim 16, wherein said device for control of steering angle of steered wheels is part of a four-wheel steering control means.

18. A yaw motion control device according to at least one of claims 3 to 17, said reference yaw rate generating means (5;5') comprising
- a constant selection device (16) selecting constants (a₁,a₂,b₁,b₂) used for generating a reference yaw rate (yb) in response to an output from said vehicle speed detector (3).

19. A yaw rate detecting device (1a;2) for use within a yaw control device for a vehicle according to at least one of claims 1 to 18, comprising
- speed sensors (Ss,Sr;1r,1l) respectively for individually detecting the ground speed of the right side of a vehicle and that of the left side of the vehicle,
- speed difference calculating means (7a;11) for calculating the difference between the respective detection values of the speed sensors (Ss,Sr;1r,1l),
- calculating means to determine a yaw rate (y) in response to an output of said speed difference calculating means (7a;11), **characterized in** a filter means (9) connected to the speed difference calculating means (7) to filter frequency components beyond a predetermined frequency from the output of the speed difference calculating means (7) to determine a yaw rate, wherein said predetermined frequency is lower than a resonance frequency of the vehicle suspension in moving direction or vertical direction.

20. A yaw rate detecting device according to claim 19, wherein said filter means (7) is a recursive filter.

21. A yaw rate detecting device according to claim 20, wherein the recursive filter has an output signal (yₙ) according to
${\text{y}}_{\text{n}} {\text{= α₁*y}}_{\text{n-1}} {\text{+ α₂*y}}_{\text{n-2}} {\text{+ α₃*y}}_{\text{n-3}} {\text{+ -β₁*y'}}_{\text{n}} {\text{+ β₂*y'}}_{\text{n-1}} {\text{+ β₃*y'}}_{\text{n-2}}$ , where α₁, α₂, α₃, β₁, β₂, β₃ are constants; n, n-1, n-2, n-3 stand for present value and previous value, etc. in each cycle where the calculation in filtering is repeated; y' is the input signal and y is the output signal (4) of the filter.

22. A yaw rate detecting device according to at least one of claims 19 to 21, wherein said calculating means comprises
- a multiplication means (12) for multiplying an output of said speed difference calculating means (7a;11) by a constant (d) depending on a tread width of the vehicle.

23. A yaw rate detecting device according to at least one of claims 19 to 22, wherein said speed sensor (Sl,Sr;1r,1l) is a sensor which detects speed of a free rotating wheel (trailing wheel).

24. A steering characteristics discriminating device, for use within a yaw control device for a vehicle according to at least one of claims 1 to 18, comprising
- a reference yaw rate generating means (5;5') for generating a reference yaw rate (y_{b}),
- a yaw rate detecting means (1a;2) for detecting a yaw rate,
- a steering characteristic determining means (7) for determining whether a steering characteristic of said vehicle is an oversteering characteristic or an understeering characteristic according to an output from said reference yaw rate generating means (5;5') and an output from said yaw rate detecting means (2).

25. A steering characteristics discriminating device according to claim 24 further comprising a deviation calculation circuit (19) for providing a deviation signal (Dr) as a difference between said reference yaw rate (y_{b}) and a yaw rate (y) of said vehicle.

26. A steering characteristics discriminating device according to at least one of claims 24 and 25 further comprising a steering angle sensor (4) for detecting a steering angle (δ) of a steering wheel, said reference yaw rate generating means (5;5') generating said reference yaw rate (y_{b}) in response to an output from said steering angle sensor (4).

27. A steering characteristics discriminating device according to at least one of claims 24 to 26 further comprising a vehicle speed detector (3) for detecting the vehicle speed, wherein said reference yaw rate generating means (5;5') generates said reference yaw rate (y_{b}) in response to ban output from said vehicle speed detector (3).

28. A steering characteristics discriminating device according to at least one of claims 24 to 27, wherein said steering characteristic determining means (7) provides a first output signal and a second output signal alternatively in dependence on the sign of the reference yaw rate (y_{b}) and the deviation signal (Dr).

## Patentansprüche

1. Gierbewegungssteuereinrichtung für ein Fahrzeug, umfassend
- ein Gierbetragserfassungsmittel (1a; 2) zum Erfassen eines Gierbetrags des Fahrzeugs
- einen Lenkwinkelsensor (Ss; 4) zum Erfassen eines Lenkwinkels (δ) eines Lenkrads;
- ein Referenzgierbetragserzeugungsmittel (2a; 5; 5') zum Erzeugen eines Referenzgierbetrags (yb) in Antwort auf eine Ausgabe von dem Lenkwinkelsensor (Ss; 4)
- ein Gierbewegungskorrekturmittel (6) zum Steuern einer Gierbewegung des Fahrzeugs in Antwort auf eine Ausgabe von dem Referenzgierbetragserzeugungsmittel (2a; 5; 5') und eine Ausgabe von dem Gierbetragserfassungsmittel (1a; 2),
**dadurch gekennzeichnet,**
daß das Referenzgierbetragserzeugungsmittel (2a; 5; 5') zum Erzeugen eines Referenzgierbetrags (Y_{b}) in Antwort auf zwei vorhergehende Werte (δₙ₋₁, δₙ₋₂) der Ausgabe des Lenkwinkelsensors (Ss; 4) ausgebildet ist.

2. Gierbewegungssteuereinrichtung nach Anspruch 1, worin das Referenzgierbetragserzeugungsmittel (2a; 5) zum Erzeugen des Referenzgierbetrags (yb) in Antwort auf die Ausgabe von dem Gierbetragserfassungsmittel (1a; 2) ausgebildet ist.

3. Gierbewegungssteuereinrichtung nach Anspruch 1 oder 2, ferner umfassend einen Fahrzeuggeschwindigkeitsdetektor (3) zum Erfassen der Fahrzeuggeschwindigkeit.

4. Gierbewegungssteuereinrichtung nach Anspruch 3, worin das Referenzgierbetragserfassungsmittel (5; 5') zum Erzeugen des Referenzgierbetrags (yb) in Antwort auf eine Ausgabe von dem Fahrzeuggeschwindigkeitsdetektor (3) ausgebildet ist.

5. Gierbewegungssteuereinrichtung nach einem der Ansprüche 1 bis 4, ferner umfassend
- ein Steuercharakteristikkorrekturmittel (8) zum Ändern einer Steuercharakteristik des Gierbewegungskorrekturmittels (6) in Antwort auf wenigstens einen Fahrparameter (δ; v; Ausgabe von 7; Ausgabe von 10') des Fahrzeugs.

6. Gierbewegungssteuereinrichtung nach Anspruch 5, worin das Steuercharakteristikkorrekturmittel (8) zum Ändern der Steuercharakteristik des Gierbewegungskorrekturmittels (6) in Antwort auf die Ausgabe von dem Fahrzeuggeschwindigkeitsdetektor (3) ausgebildet ist.

7. Gierbewegungssteuereinrichtung nach einem der Ansprüche 5 oder 6, ferner umfassend
- ein Lenkcharakteristikbestimmungsmittel (7) zum Bestimmen einer Lenkcharakteristik des Fahrzeugs gemäß einer Ausgabe von dem Referenzgierbetragserzeugungsmittel (5; 5') und einer Ausgabe von dem Gierbetragserfassungsmittel (2), worin das Steuercharakteristikkorrekturmittel (8) zum Ändern einer Steuercharakteristik des Gierbewegungskorrekturmittels (6) in Antwort auf eine Ausgabe von dem Lenkcharakteristikbestimmungsmittel (7) ausgebildet ist.

8. Gierbewegungssteuereinrichtung nach einem der Ansprüche 5 bis 7, ferner umfassend
- ein Antriebskraftverteilungsverhältnis-Erfassungsmittel (10') zum Erfassen des Antriebskraftverteilungsverhältnisses zwischen vorderen und hinteren Rädern, worin das Steuercharakteristikkorrekturmittel (8) zum Ändern einer Steuercharakteristik des Gierbewegungskorrekturmittels (6) in Antwort auf eine Ausgabe von dem Antriebskraftverteilungsverhältnis-Erfassungsmittel (10') ausgebildet ist.

9. Gierbewegungssteuereinrichtung nach einem der Ansprüche 1 bis 8, worin das Referenzgierbetragserzeugungsmittel (5) zum Erzeugen des Referenzgierbetrags (yb) in Antwort auf eine Entwicklung (yₙ₋₁, yₙ₋₂) einer Ausgabe des Gierbetragserfassungsmittels (2) ausgebildet ist.

10. Gierbewegungssteuereinrichtung nach Anspruch 9, worin das Referenzgierbetragserzeugungsmittel (5) ein Ausgangssignal (y_{b}) entsprechend
${\text{y}}_{\text{b}} {\text{= -a₁*y}}_{\text{n-1}} {\text{- a₂*y}}_{\text{n-2}} {\text{+ b₁*δ}}_{\text{n-1}} {\text{+ b₂*δ}}_{\text{n-2}}$
aufweist, wobei a₁, a₂, b₁, b₂ Parameter sind, welche sich mit der Fahrzeuggeschwindigkeit ändern, n-1 und n-2 für einen vorhergehenden und einen vorletzten Wert in jedem Durchlauf stehen, in welchem die Berechnung von y_{b} wiederholt wird, y die Ausgabe von dem Gierbetragserfassungsmittel (2) ist und δ die Ausgabe des Lenkwinkelsensors (4) ist.

11. Gierbewegungssteuereinrichtung nach einem der Ansprüche 1 bis 8, worin das Referenzgierbetragserzeugungsmittel (5') zum Erzeugen des Referenzgierbetrags (y_{b}) in Antwort auf eine Entwicklung (ybₙ₋₁, ybₙ₋₂) einer Ausgabe des Referenzgierbetragserzeugungsmittels (5) ausgebildet ist.

12. Gierbewegungssteuereinrichtung nach Anspruch 11, worin das Referenzgierbetragserzeugungsmittel (5') ein Ausgangssignal (y_{b}) entsprechend
${\text{y}}_{\text{b}} {\text{= -a₁*y}}_{\text{bn-1}} {\text{- a₂*y}}_{\text{bn-2}} {\text{+ b₁*δ}}_{\text{n-1}} {\text{+ b₂*δ}}_{\text{n-2}}$
aufweist, wobei a₁, a₂, b₁, b₂ Parameter sind, welche sich mit der Fahrzeuggeschwindigkeit ändern, n-1 und n-2 für einen vorhergehen Wert und einen vorletzten Wert in jedem Durchlauf stehen, in welchem die Berechnung von y_{b} wiederholt wird, δ die Ausgabe des Lenkwinkelsensors (4) ist.

13. Gierbewegungssteuereinrichtung nach einem der Ansprüche 1 bis 12, worin das Gierbewegungskorrekturmittel (6) eine Antriebsradausgangsdrehmomentsteuereinrichtung umfaßt.

14. Gierbewegungssteuereinrichtung nach Anspruch 13, worin die Antriebsradausgangsdrehmomentsteuereinrichtung eine Motorausgangskraftsteuereinrichtung (23) umfaßt.

15. Gierbewegungssteuereinrichtung nach einem der Ansprüche 1 bis 14, worin das Gierbetragserfassungsmittel (1a; 2) zum Erzeugen eines Referenzgierbetrags (y_{b}) gemäß einer Differenz der Drehzahlen (Vr, Vl) zwischen rechten und linken, sich frei drehenden Rädern (Wr, Wl) ausgebildet ist.

16. Gierbewegungssteuereinrichtung nach einem der Ansprüche 1 bis 15, worin das Gierbewegungskorrekturmittel (6) eine Einrichtung zum Steuern eines Lenkwinkels von gelenkten Rädern umfaßt.

17. Gierbewegungssteuereinrichtung nach Anspruch 16, worin die Einrichtung zum Steuern des Lenkwinkels von gelenkten Rädern Teil eines Vierradlenkungssteuermittels ist.

18. Gierbewegungssteuereinrichtung nach einem der Ansprüche 3 bis 17, wobei das Referenzgierbetragserzeugungsmittel (5; 5') umfaßt:
- eine Konstantenauswahleinrichtung (16), welche Konstanten (a₁, a₂, b₁, b₂), die zum Erzeugen eines Referenzgierbetrags (yb) verwendet werden, in Antwort auf eine Ausgabe von dem Fahrzeuggeschwindigkeitsdetektor (3) auswählt.

19. Gierbetragserfassungseinrichtung (1a; 2) zur Verwendung in einer Gierbetragssteuereinrichtung für ein Fahrzeug nach einem der Ansprüche 1 bis 18, umfassend
- Geschwindigkeitssensoren (Ss, Sr; 1r, 1l) jeweils zum individuellen Erfassen der Grundgeschwindigkeit der rechten Seite eines Fahrzeugs und derjenigen der linken Seite eines Fahrzeugs;
- Geschwindigkeitsdifferenzberechnungsmittel (7a; 11) zum Berechnen der Differenz zwischen den jeweiligen Erfassungswerten der Geschwindigkeitssensoren (Ss, Sr; 1r, 1l),
- Berechnungsmittel zum Bestimmen eines Gierbetrags (y) in Antwort auf eine Ausgabe des Geschwindigkeitsdifferenzberechnungsmittels (7a; 11),
**gekennzeichnet durch**
ein Filtermittel (9), welches mit dem Geschwindigkeitsdifferenzberechnungsmittel (7) verbunden ist zum Filtern von Frequenzkomponenten über einer vorbestimmten Frequenz aus der Ausgabe des Geschwindigkeitsdifferenzberechnungsmittels (7), um einen Gierbetrag zu bestimmen, worin die vorbestimmte Frequenz kleiner ist, als eine Resonanzfrequenz der Fahrzeugaufhängung in Bewegungsrichtung oder in vertikaler Richtung.

20. Gierbetragserfassungseinrichtung nach Anspruch 19, worin das Filtermittel (7) ein rekursives Filter ist.

21. Gierbetragserfassungseinrichtung nach Anspruch 20, worin das rekursive Filter ein Ausgangssignal (yₙ) entsprechend
${\text{y}}_{\text{n}} {\text{= α₁*y}}_{\text{n-1}} {\text{+ α₂*y}}_{\text{n-2}} {\text{+ α₃*y}}_{\text{n-3}} {\text{+ β₁*y'}}_{\text{n}} {\text{+ β₂*y'}}_{\text{n-1}} {\text{+ β₃*y'}}_{\text{n-2}}$
aufweist, wobei α₁, α₂, α₃, β₁, β₂, β₃ Konstanten sind, n, n-1, n-2, n-3 für einen vorhergehenden Wert, einen vorletzten Wert, etc. in jedem Durchlauf stehen, in welchem die Berechnung zum Filtern wiederholt wird, y' das Eingangssignal und y das Ausgangssignal (4) des Filters ist.

22. Gierbetragserfassungseinrichtung nach wenigstens einem der Ansprüche 19 bis 21, worin das Berechnungsmittel umfaßt
- ein Multiplikationsmittel (12) zum Multiplizieren einer Ausgabe des Geschwindigkeitsdifferenzberechnungsmittels (7a; 11) mit einer Konstante (d), welche von der Spurweite des Fahrzeugs abhängt.

23. Gierbetragserfassungseinrichtung nach wenigstens einem der Ansprüche 19 bis 22, worin der Geschwindigkeitssensor (Sl, Sr; 1r, 1l) ein Sensor ist, welcher die Drehzahl eines sich frei drehenden Rads (Mitlaufrad) erfaßt.

24. Lenkcharakteristikunterscheidungseinrichtung zur Verwendung in einer Giersteuereinrichtung für ein Fahrzeug nach einem der Ansprüche 1 bis 18, umfassend
- ein Referenzgierbetragserzeugungsmittel (5; 5') zum Erzeugen eines Referenzgierbetrags (y_{b});
- ein Gierbetragserfassungsmittel (1a; 2) zum Erfassen eines Gierbetrags;
- ein Lenkcharakteristikbestimmungsmittel (7) zum Bestimmen, ob eine Lenkcharakteristik des Fahrzeugs eine Übersteuer-Charakteristik oder eine Untersteuer-Charakteristik ist, gemäß einer Ausgabe von dem Referenzgierbetragserzeugungsmittel (5; 5') und einer Ausgabe von dem Gierbetragserfassungsmittel (2).

25. Lenkcharakteristikunterscheidungseinrichtung nach Anspruch 24, ferner umfassend eine Abweichungsberechnungsschaltung (19) zum Vorsehen eines Abweichungssignals (Dr) als eine Differenz zwischen dem Referenzgierbetrag (y_{b}) und einem Gierbetrag (y) des Fahrzeugs.

26. Lenkcharakteristikunterscheidungseinrichtung nach einem der Ansprüche 24 und 25, ferner umfassend einen Lenkwinkelsensor (4) zum Erfassen eines Lenkwinkels (δ) des Lenkrads, wobei das Referenzgierbetragserzeugungsmittel (5; 5') den Referenzgierbetrag (y_{b}) in Antwort auf eine Ausgabe von dem Lenkwinkelsensor (4) erzeugt.

27. Lenkcharakteristikunterscheidungseinrichtung nach einem der Ansprüche 24 bis 26, ferner umfassend einen Fahrzeuggeschwindigkeitsdetektor (3) zum Erfassen der Fahrzeuggeschwindigkeit, worin das Referenzgierbetragserzeugungsmittel (5; 5') den Referenzgierbetrag (y_{b}) in Antwort auf eine Ausgabe von dem Fahrzeuggeschwindigkeitsdetektor (3) erzeugt.

28. Lenkcharakteristikunterscheidungseinrichtung nach einem der Ansprüche 24 bis 27, worin das Lenkcharakteristikbestimmungsmittel (7) ein erstes Ausgangssignal und alternativ ein zweites Ausgangssignal vorsieht in Abhängigkeit des Vorzeichens des Referenzgierbetrags (y_{b}) und des Abweichungssignals (Dr).

## Revendications

1. Dispositif de contrôle de mouvements de lacet d'un véhicule, comprenant
- un moyen (1a ; 2) détecteur de vitesses de lacet, pour détecter une vitesse de lacet dudit véhicule ;
- un capteur (Ss ; 4) d'angles de braquage, pour détecter un angle de braquage (δ) d'un volant de direction ;
- un moyen (2a ; 5 ; 5') générateur de vitesses de lacet de référence, pour engendrer une vitesse de lacet de référence (yb) en réponse à un signal de sortie provenant dudit capteur (Ss ; 4) d'angles de braquage ;
- un moyen (6) correcteur de mouvements de lacet, pour contrôler un mouvement de lacet dudit véhicule en réponse à un signal de sortie provenant dudit moyen (2a ; 5 ; 5') générateur de vitesses de lacet de référence, et à un signal de sortie provenant dudit moyen (1a ; 2) détecteur de vitesses de lacet,
caractérisé par le fait
que ledit moyen (2a ; 5 ; 5') générateur de vitesses de lacet de référence est conçu pour engendrer une vitesse de lacet de référence (Y_{b}) en réponse à deux valeurs précédentes (δₙ₋₁, δₙ₋₂) du signal de sortie dudit capteur (Ss ; 4) d'angles de braquage.

2. Dispositif de contrôle de mouvements de lacet, selon la revendication 1, dans lequel ledit moyen (2a ; 5) générateur de vitesses de lacet de référence est conçu pour engendrer ladite vitesse de lacet de référence (yb) en réponse audit signal de sortie provenant dudit moyen (1a ; 2) détecteur de vitesses de lacet.

3. Dispositif de contrôle de mouvements de lacet, selon au moins l'une des revendications 1 à 2, comprenant en outre
- un détecteur (3) de vitesses du véhicule, pour détecter la vitesse du véhicule.

4. Dispositif de contrôle de mouvements de lacet, selon la revendication 3, dans lequel ledit moyen (5 ; 5') générateur de vitesses de lacet de référence est conçu pour engendrer ladite vitesse de lacet de référence (yb) en réponse à un signal de sortie provenant dudit détecteur (3) de vitesses du véhicule.

5. Dispositif de contrôle de mouvements de lacet, selon au moins l'une des revendications 1 à 4, comprenant en outre
- un moyen (8) correcteur de caractéristiques de commande, pour faire varier une caractéristique de commande dudit moyen (6) correcteur de mouvements de lacet en réponse à au moins un paramètre d'entraînement (δ ; v ; signal de sortie de 7 ; signal de sortie de 10') du véhicule.

6. Dispositif de contrôle de mouvements de lacet, selon la revendication 5, dans lequel ledit moyen (8) correcteur de caractéristiques de commande est conçu pour faire varier ladite caractéristique de commande dudit moyen (6) correcteur de mouvements de lacet en réponse audit signal de sortie provenant dudit détecteur (3) de vitesses du véhicule.

7. Dispositif de contrôle de mouvements de lacet, selon au moins l'une des revendications 5 à 6, comprenant en outre
- un moyen (7) de détermination de caractéristiques de braquage, pour déterminer une caractéristique de braquage dudit véhicule en fonction d'un signal de sortie provenant dudit moyen (5 ; 5') générateur de vitesses de lacet de référence, et d'un signal de sortie provenant dudit moyen (2) détecteur de vitesses de lacet, dans lequel ledit moyen (8) correcteur de caractéristiques de commande est conçu pour faire varier une caractéristique de commande dudit moyen (6) correcteur de mouvements de lacet en réponse à un signal de sortie provenant dudit moyen (7) de détermination de caractéristiques de braquage.

8. Dispositif de contrôle de mouvements de lacet, selon au moins l'une des revendications 5 à 7, comprenant en outre
- un moyen (10') détecteur de rapports de distribution de forces d'entraînement, pour détecter le rapport de distribution de forces d'entraînement entre des roues avant et arrière,
dans lequel ledit moyen (8) correcteur de caractéristiques de commande est conçu pour faire varier une caractéristique de commande dudit moyen (6) correcteur de mouvements de lacet en réponse à un signal de sortie provenant dudit moyen (10') détecteur de rapports de distribution de forces d'entraînement.

9. Dispositif de contrôle de mouvements de lacet, selon au moins l'une des revendications 1 à 8, dans lequel ledit moyen (5) générateur de vitesses de lacet de référence est conçu pour engendrer ladite vitesse de lacet de référence (yb) en réponse à un historique (yₙ₋₁, yₙ₋₂) d'un signal de sortie dudit moyen (2) détecteur de vitesses de lacet.

10. Dispositif de contrôle de mouvements de lacet, selon la revendication 9, dans lequel ledit moyen (5) générateur de vitesses de lacet de référence délivre un signal de sortie (y_{b}) exprimé par
${\text{y}}_{\text{b}} {\text{= - a₁*y}}_{\text{n-1}} {\text{- a₂*y}}_{\text{n-2}} {\text{+ b₁*δ}}_{\text{n-1}} {\text{+ b₂*δ}}_{\text{n-2}} \text{,}$
expression dans laquelle a₁, a₂, b₁, b₂ sont des paramètres variant avec la vitesse du véhicule ; n-1 et n-2 représentent une valeur précédente et une valeur antéprécédente dans chaque cycle, lorsque le calcul de y_{b} est répété ; y est ledit signal de sortie dudit moyen (2) détecteur de vitesses de lacet, et δ est ledit signal de sortie dudit capteur (4) d'angles de braquage.

11. Dispositif de contrôle de mouvements de lacet, selon au moins l'une des revendications 1 à 8, dans lequel ledit moyen (5') générateur de vitesses de lacet de référence est conçu pour engendrer ladite vitesse de lacet de référence (y_{b}) en réponse à un historique (ybₙ₋₁, ybₙ₋₂) d'un signal de sortie dudit moyen (5) générateur de vitesses de lacet de référence.

12. Dispositif de contrôle de mouvements de lacet, selon la revendication 11, dans lequel ledit moyen (5') générateur de vitesses de lacet de référence délivre un signal de sortie y_{b} exprimé par
${\text{y}}_{\text{b}} {\text{= - a₁*y}}_{\text{bn-1}} {\text{- a₂*y}}_{\text{bn-2}} {\text{+ b₁*δ}}_{\text{n-1}} {\text{+ b₂*δ}}_{\text{n-2}} \text{,}$
expression dans laquelle a₁, a₂, b₁, b₂ sont des paramètres variant avec la vitesse du véhicule ; n-1 et n-2 représentent une valeur précédente et une valeur antéprécédente dans chaque cycle, lorsque le calcul de y_{b} est répété ; et δ est ledit signal de sortie dudit capteur (4) d'angles de braquage.

13. Dispositif de contrôle de mouvements de lacet, selon au moins l'une des revendications 1 à 12, dans lequel ledit moyen (6) correcteur de mouvements de lacet comprend un dispositif de commande du couple de sortie des roues motrices.

14. Dispositif de contrôle de mouvements de lacet, selon la revendication 13, dans lequel ledit dispositif de commande du couple de sortie des roues motrices comprend un dispositif (23) de commande de la puissance de sortie du moteur.

15. Dispositif de contrôle de mouvements de lacet, selon au moins l'une des revendications 1 à 14, dans lequel ledit moyen (1a ; 2) détecteur de vitesses de lacet est conçu pour engendrer une vitesse de lacet de référence (y_{b}) en fonction d'une différence entre les vitesses angulaires (Vr, Vl) de roues de droite et de gauche (Wr, Wl) à rotation libre.

16. Dispositif de contrôle de mouvements de lacet, selon au moins l'une des revendications 1 à 15, dans lequel ledit moyen correcteur de mouvements de lacet comprend un dispositif pour commander l'angle de braquage de roues braquées.

17. Dispositif de contrôle de mouvements de lacet, selon la revendication 16, dans lequel ledit dispositif pour commander l'angle de braquage de roues braquées fait partie d'un moyen de commande de braquage des quatre roues.

18. Dispositif de contrôle de mouvements de lacet, selon au moins l'une des revendications 3 à 17, ledit moyen (5 ; 5') générateur de vitesses de lacet de référence comprenant
- un dispositif (16) sélecteur de constantes, sélectionnant des constantes (a₁, a₂, b₁, b₂) utilisées pour engendrer une vitesse de lacet de référence (yb) en réponse à un signal de sortie provenant dudit détecteur (3) de vitesses du véhicule.

19. Dispositif (1a ; 2) détecteur de vitesses de lacet, destiné à être utilisé dans un dispositif de contrôle de mouvements de lacet d'un véhicule, selon au moins l'une des revendications 1 à 18, comprenant
- des capteurs de vitesses (Ss, Sr ; 1r, 1l) respectivement conçus pour détecter individuellement la vitesse au sol du côté droit d'un véhicule, et celle du côté gauche du véhicule,
- des moyens (7a ; 11) calculateurs de différences de vitesses, pour calculer la différence entre les valeurs respectives de détection des capteurs de vitesses (Ss, Sr ; 1r, 1l),
- des moyens calculateurs pour déterminer une vitesse de lacet (y) en réponse à un signal de sortie desdits moyens (7a ; 11) calculateurs de différences de vitesses, caractérisé par un moyen de filtrage (9) raccordé aux moyens (7) calculateurs de différences de vitesses pour filtrer des composants de fréquence, excédant une fréquence prédéterminée, du signal de sortie des moyens (7) calculateurs de différences de vitesses, afin de déterminer une vitesse de lacet, ladite fréquence prédéterminée étant inférieure à une fréquence de résonance de la suspension du véhicule dans une direction de mouvement ou direction verticale.

20. Dispositif détecteur de vitesses de lacet, selon la revendication 19, dans lequel ledit moyen de filtrage (7) est un filtre récurrent.

21. Dispositif détecteur de vitesses de lacet, selon la revendication 20, dans lequel le filtre récurrent délivre un signal de sortie (yₙ) exprimé par
${\text{y}}_{\text{n}} {\text{= α₁*y}}_{\text{n-1}} {\text{+ α₂*y}}_{\text{n-2}} {\text{+ α₃*y}}_{\text{n-3}} {\text{+ β₁*y'}}_{\text{n}} {\text{+ β₂*y'}}_{\text{n-1}} {\text{+ β₃*y'}}_{\text{n-2}}$ , expression dans laquelle α₁, α₂, α₃, β₁, β₂, β₃, sont des constantes : n, n-1, n-2, n-3 représentent une valeur présente et une valeur précédente, etc., dans chaque cycle lorsque le calcul est répété lors du filtrage ; y' est le signal d'entrée et y est le signal de sortie (4) du filtre.

22. Dispositif détecteur de vitesses de lacet, selon au moins l'une des revendications 19 à 21, dans lequel lesdits moyens calculateurs comprennent
- un moyen multiplicateur (12) pour multiplier un signal de sortie desdits moyens (7a ; 11) calculateurs de différences de vitesses par une constante (d) dépendant de la voie du véhicule.

23. Dispositif détecteur de vitesses de lacet, selon au moins l'une des revendications 19 à 22, dans lequel ledit capteur de vitesses (Sl, Sr ; 1r, 1l) est un capteur qui détecte la vitesse d'une roue à rotation libre (roue traînée).

24. Dispositif de discrimination de caractéristiques de braquage, destiné à être utilisé dans un dispositif de contrôle de mouvements de lacet d'un véhicule, selon au moins l'une des revendications 1 à 18, comprenant
- un moyen (5 ; 5') générateur de vitesses de lacet de référence, pour engendrer une vitesse de lacet de référence (y_{b}).
- un moyen (1a ; 2) détecteur de vitesses de lacet, pour détecter une vitesse de lacet,
- un moyen (7) de détermination de caractéristiques de braquage, pour déterminer si une caractéristique de braquage dudit véhicule est une caractéristique de surbraquage ou une caractéristique de sous-braquage, en fonction d'un signal de sortie provenant dudit moyen (5 ; 5') générateur de vitesses de lacet de référence, et d'un signal de sortie provenant dudit moyen (2) détecteur de vitesses de lacet.

25. Dispositif de discrimination de caractéristiques de braquage, selon la revendication 24, comprenant en outre un circuit (19) calculateur de déviations pour engendrer un signal de déviation (Dr) représentant une différence entre ladite vitesse de lacet de référence (y_{b}) et une vitesse de lacet (y) dudit véhicule.

26. Dispositif de discrimination de caractéristiques de braquage selon au moins l'une des revendications 24 et 25, comprenant en outre un capteur (4) d'angles de braquage pour détecter un angle de braquage (δ) d'un volant de direction, ledit moyen (5 ; 5') générateur de vitesses de lacet de référence engendrant ladite vitesse de lacet de référence (y_{b}) en réponse à un signal de sortie provenant dudit capteur (4) d'angles de braquage.

27. Dispositif de discrimination de caractéristiques de braquage, selon au moins l'une des revendications 24 à 26, comprenant en outre un détecteur (3) de vitesses du véhicule pour détecter la vitesse du véhicule, ledit moyen (5 ; 5') générateur de vitesses de lacet de référence engendrant ladite vitesse de lacet de référence (y_{b}) en réponse à un signal de sortie provenant dudit détecteur (3) de vitesses du véhicule.

28. Dispositif de discrimination de caractéristiques de braquage, selon au moins l'une des revendications 24 à 27, dans lequel ledit moyen (7) de détermination de caractéristiques de braquage délivre, alternativement, un premier signal de sortie et un second signal de sortie dépendant du signe de la vitesse de lacet de référence (y_{b}) et du signal de déviation (Dr).
